# EUROPÄISCHE PATENTSCHRIFT

(11) **EP 0 454 893 B1**
(45) Veröffentlichungstag und Bekanntmachung des Hinweises auf die Patenterteilung: **11.05.1994**
(21) Anmeldenummer: 90113438.7
(22) Anmeldetag: 13.07.1990
(51) Int. Cl.: G21C 17/01

(54) **yrüfgeräte-Manipulator für Druckbehälter von Kernreaktoren**
Inspection apparatus manipulator for pressure vessel of nuclear reactors
Manipulateur porte-appareil d'examen pour cuve de pression des réacteurs nucléaires

(30) Priorität: 03.05.1990 DE 4014161
(43) Veröffentlichungstag der Anmeldung: 06.11.1991
(73) Patentinhaber: MAN ENERGIE GMBH, 90461 Nürnberg (DE)
(72) Erfinder: Müller, Günter, D-8500 Nürnberg (DE); Otte, Heinz-Josef, D-8508 Wendelstein 2 (DE); Roth, Werner, D-8806 Neuendettelsau (DE)
(74) Vertreter: Tergau, Enno, Dipl.-Ing.

(56) Entgegenhaltungen:
- DE-A- 2 644 261
- DE-A- 3 112 201
- DE-A- 3 235 297
- DE-A- 3 524 390
- FR-A- 2 385 185
- GB-A- 2 159 227

## Beschreibung

Die Erfindung betrifft eine Einrichtung zur zerstörungsfreien Prüfung eines aufrechtstehenden zylindrischen Kernreaktor-Druckbehälters, in welchem sich ein koaxial angeordneter ebenfalls zylindrischer Kernbrennstoff-Behälter befindet. Die Einrichtung weist einen vertikalen in den Druckbehälter hinein ragenden Mast auf, der an seinem oberen und unteren Ende in Umfangsrichtung des Druckbehälters verfahrbar gelagert ist und der einen längs des Mastes verfahrbaren Träger für Prüfgeräte aufweist. Einrichtungen dieser Art sind beispielsweise in der deutschen Offenlegungsschrift DE-A-26 44 261 beschrieben.

Die Druckbehälter von Kernreaktoren werden bekanntlich aus mehreren gebogenen plattenförmigen oder vorzugsweise ringförmigen Teilen zusammengesetzt, wobei die Teile durch Schweißnähte miteinander verbunden werden. Die Schweißnähte sowie die unmittelbar an die Nähte angrenzenden Teile der Platten stellen kritische Bereiche im Druckbehälter dar, da sie infolge von Einschlüssen, Lunkern, Versprödungen und sonstigen Fehlstellen Zonen geringerer Festigkeit aufweisen können. Es ist aus diesem Grunde unerläßlich, den gesamten Druckbehälter, insbesondere aber die genannten Zonen vor der ersten Inbetriebnahme und auch während des Betriebes des Druckbehälters auf Fehlerfreiheit zu überprüfen. Es geschieht dies in aller Regel mit Hilfe von Ultraschallgeräten, wobei Einschlüsse und Lunker infolge ihres vom übrigen Werkstoff abweichenden Echoverhaltens erkannt und lokalisiert werden können. Zur Durchführung derartiger Untersuchungen ist es erforderlich, das Prüfgerät mit großer Genauigkeit entlang der Innen- oder Außenwand des Druckbehälters zu führen und dabei Mittel vorzusehen, welche laufend die Position des Prüfgerätes mit großer Genauigkeit aufzeichnen. Die dabei auftretenden technischen Schwierigkeiten werden deutlich, wenn man sich vergegenwärtigt, daß die Höhe eines derartigen Druckbehälters 10 m und mehr betragen kann. Der Manipulator, welcher die Prüfgeräte führt und an ihren Einsatzort bringt, muß die jeweilige Position des Prüfgerätes mit einer Genauigkeit von +/-3 mm anzeigen können.

Aus der bereits genannten DE-A 26 44 261 ist ein Prüfmanipulator bekannt, der im wesentlichen aus einem vertikal angeordneten Mast besteht, welcher am oberen und unteren Ende auf Laufschienen verfahrbar gelagert ist. Die Laufschienen sind ringförmig um den zylindrischen Kernbrennstoffbehälter angeordnet, so daß der Mast mit guter Führung oben und unten in Umfangsrichtung verschoben werden kann. Ein Träger für die Prüfgeräte ist am Mast gelagert, wobei dieser Träger in vertikaler Richtung verfahrbar ist. Die gesamte Einrichtung ist im Spart zwischen Kernbrennstoffbehälter und Innenmantel des Druckbehälters angeordnet und verhältnismäßig einfach aufgebaut.

Prüfmanipulatoren dieser Art sind nur einsetzbar, wenn es sich um Reaktorkonstruktionen handelt, in deren Ringraum zwischen Kernbrennstoffbehälter und Innenmantel des Druckbehälters keine störenden Einbauten, wie Rohrleitungen oder sonstige Armaturen vorhanden sind. Dies ist bei neueren Reaktorkonstruktionen häufig der Fall; es existieren aber zahlreiche ältere Konstruktionen, die diese Bedingung nicht erfüllen, so daß Manipulatoren dieser Art in solchen Fällen nicht einsetzbar sind.

Der Erfindung liegt die Aufgabe zugrunde, die vorbekannten Prüfmanipulatoren für Druckkernreaktoren weiter zu entwickeln, so daß sie auch bei solchen Reaktoren einsetzbar sind, bei denen das Prüfgerät in verhältnismäßig enge Spalte geführt werden muß, wobei Hindernisse, die von Einbauten und sonstigen Verengungen im Druckbehälter gebildet werden, umfahren werden können.

Zur Lösung dieser Aufgabe wird von einer Einrichtung der eingangs geschilderten Art ausgegangen, die jedoch zusätzlich noch folgende Merkmale bzw. Merkmals-Gruppen aufweist:
- Der Mast ist am oberen Ende verfahrbar an einer Brücke gelagert, die ihrerseits auf einer ersten oberen Ringschiene verfahrbar ist, welche am oberen Rand des Druckbehälters abnehmbar befestigt ist;
- Der Mast ist am unteren Ende verfahrbar auf einer zweiten unteren Ringschiene gelagert, die ihrerseits am oberen Rand des Kernbrennstoffbehälters abnehmbar angeordnet ist;
- Der Mast ist als Hohlschiene ausgebildet, in deren Inneren sich ein in Längsrichtung verschiebbares in Richtung zum Behälterinnenmantel auslenkbares Band befindet, daß im unteren Bereich des Mastes aus diesem austritt und bis in den Ringraum zwischen der inneren Mantelfläche des Druck-Behälters und der äußeren Mantelfläche des Kernbrennstoffbehälters reicht und an seinem Ende einen ersten Träger für wenigstens ein Prüfgerät aufweist.

Bei der vorgeschlagenen Konstruktion reicht also der vertikale Mast nicht in den engen Ringspalt zwischen Kernbrennstoffbehälter und Innenmantel des Druckbehälters hinein, sondern er wird im Raum oberhalb des Kernbrennstoffbehälters verfahren, wobei die obere Ringschiene auswechselbar am Reaktor angeordnet ist und nur dann eingesetzt wird, wenn eine Prüfung durchgeführt werden soll. Der enge Ringraum im Bereich zwischen Kernbrennstoffbehälter und Druckbehälterinnenmantel, der gegebenenfalls noch durch Einbauten, Rohrleitungen und Armaturen verengt sein kann, wird durch das auslenkbare Band erreicht, welches feinfühlig in Umfangsrichtung, in vertikaler Richtung, aber auch in radialer Richtung geführt werden kann.

Um die radiale Differenz zu überbrücken, die zwischen der unteren Ringschiene, welche auf dem Kernbrennstoffbehälter angeordnet ist und der oberen Ringschiene besteht, läuft die obere Führung des vertikalen Mastes auf einer Brücke. Diese Brücke wird von einem umsteuerbaren Antriebselektromotor angetrieben, der mit einem Zahnkranz der oberen Ringschiene in Wirkverbindung steht. Bei einer bevorzugten Ausführungsform wird ferner vorgeschlagen, daß die Gruppe oder auch ein damit verbundenes Teil über Koppelglieder auch auf ein Fahrwerk am unteren Ende des Mastes einwirkt. Es kann auf diese Weise eine exakte Doppelsteuerung durchgeführt werden, welche die Führungspräzision der Gesamteinrichtung verbessert. Die Koppelglieder können im Prinzip mechanischer Art sein; beim heutigen Stande der Technik werden aber elektronische Koppelglieder bevorzugt; beispielsweise solche, die einen Inkrementalmaßstab, der sich im Bereich der oberen Ringschiene befindet, abtastet und der das so gewonnene Digitalmaß auf eine entsprechende Steuerungseinrichtung an der unteren Schiene überträgt.

Das im Inneren der Vertikalschiene angeordnete und unten austretende auslenkbare Band ist vorzugsweise eine Gliederkette, wie dies an sich bekannt ist, beispielsweise aus der GB-A 2 159 227. Anstelle einer Gliederkette können aber auch andere flexible Werkstoffe verwendet werden, beispielsweise ein entsprechend dimensioniertes Metallband, beispielsweise aus rostfreiem Stahl oder auch ein Gewebe- oder Geflechtband. Wesentlich ist lediglich, daß das Band in Richtung senkrecht zu seiner Breitenausdehnung verformbar, also auslenkbar ist, und daß es in Richtung der Breitenausdehnung möglichst wenig verformbar, also formstabil ist.

Des weiteren wird vorgeschlagen, daß der bereits erwähnte erste Träger, der sich am Ende des auslenkbaren Bandes befindet, seitlich ausfahrbar ist. Durch diese Anordnung wird die Möglichkeit eröffnet, daß der Träger mitsamt dem darauf angeordneten Prüfgerät in Spalte gebracht werden kann, welche dem auslenkbaren Band an sich nicht zugänglich sind, da sich Einbauten und Hindernisse dazwischen befinden. Das Band wird dann neben diesen Einbauten herabgelassen und der Träger am Ende des Bandes kann durch die seitliche Ausfahrbarkeit dann in Spalte geführt werden, die sich hinter den Einbauten befinden. Vorteilhaft ist es, wenn der erste Träger über ein 2-teiliges Teleskop mit dem Ende des Bandes verbunden ist, dessen Schübe in aufeinander abgestimmter Weise antreibbar sind. Ein derartiges 2-teiliges Teleskop bieten den Vorzug großer Stabilität auch im ausgefahrenen Zustand und es bietet die Möglichkeit, den Träger bzw. die darauf angeordneten Prüfgeräte über Flachbandkabel mit der Stromquelle zu verbinden.

Für die Durchführung von Ultraschallprüfungen im Inneren von Druckbehältern, aber auch für die Durchführung anderer möglicher Prüfungen, beispielsweise mit Röntgengeräten ist es unerläßlich, daß die Prüfköpfe dicht an die zu prüfende Oberfläche gebracht und dort angedrückt werden. Um dies ohne Beeinträchtigung der leichten und exakten Verfahrbarkeit des Manipulators zu ermöglichen wird vorgeschlagen, daß der am Ende des auslenkbaren Bandes angeordnete Träger hydraulische Rückstoßdüsen aufweist, die ihn bzw. das an ihm montierte Prüfgerät gegen den Innenmantel des Druckbehälters andrücken.

Bei der Verwirklichung des erfindungsgemäßen Manipulators kommt der Forderung Bedeutung zu, daß nicht nur der vertikale Mast möglichst exakt geführt und positioniert werden kann, sondern auch das auslenkbare Band. Darüber hinaus ist es aber auch erforderlich, daß dieses Band weitgehend frei manipulierbar ist, wobei die Positionierung in Umfangsrichtung durch den verfahrbaren Mast erfolgt. Die Positionierung in radialer Richtung muß aber durch zusätzliche Einrichtungen sichergestellt werden. Hierzu wird vorgeschlagen, daß der Mast im unteren Bereich auf seiner zum Druckbehälter-Innenmantel gerichteten Seite eine Führungsöffnung für das Band aufweist und daß im Bereich zwischen dieser Führungsöffnung und dem unteren Fahrwerk ein verstellbarer Ausleger angeordnet ist, mit dem das Band in Richtung Druckbehälterinnenfläche auslenkbar ist.

Um zu ermöglichen, daß auch diejenigen Bereiche des Druck-Behälterinnenmantels geprüft werden können, die vom auslenkbaren Band nicht erreicht werden, wird ferner vorgeschlagen, daß an wenigstens einer Schmalseite des Mastes wenigstens ein zweiter Träger zur Aufnahme von Prüfgeräten angeordnet ist, der beliebig in Richtung der Mastlängsachse und auf die Innenfläche des Druckbehälters, seitlich zur Mastlängsachse sowie rotativ um die Arbeitsachse des Prüfgerätes verstellbar ist. Dieser zweite Träger tritt also im wesentlichen dann in Aktion, wenn es darum geht, den Bereich oberhalb des Kernbrennstoffbehälters zu prüfen. In einem gewissen Bereich überlappen sich die Prüfbereiche.

Bei der Arbeit mit dem angegebenen Manipulator kann es erwünscht sein, daß der zweite Träger mitsamt den darauf angeordneten Prüfgeräten, während des Betriebes des Manipulators entfernt wird, z.B. um Änderungen an den Prüfsystemen vorzunehmen. Hierzu wird vorgeschlagen, daß der zweite Träger einschließlich seines Drehantriebes mittels einer Lanze abnehmbar ist. Die Lanze kann von oben eingeführt und in einen Führungstrichter gesteckt werden. Nach dem Einführen wird sie durch eine Viertel- oder Halbumdrehung arretiert, wobei gleichzeitig die Verbindung des Trägers mit der Trägeraufnahme gelöst wird. Die gesamte Einheit kann dann mit der Lanze hochgezogen und oben aus dem Reaktorbehälter entfernt werden.

Die Erfindung wird im Folgenden anhand der beigefügten Zeichnung näher erläutert:
- Fig. 1: eine perspektivische Übersichtszeichnung über einen Kernreaktor-Druckbehälter, teilweise aufgeschnitten, mit eingesetztem Manipulator;
- Fig. 2: eine Seitenansicht und
- Fig. 3: eine Vorderansicht des eingesetzen Manipulators;
- Fig. 4: eine Prinzipzeichnung des ersten Trägers mit Druckwasserdüsen in Seitenansicht;
- Fig. 5: eine vereinfachte Ansicht des seitlich ausfahrbaren ersten Trägers mit Zweifach-Teleskop in Vorderansicht;
- Fig. 6: ein Querschnitt entlang der Linie VI-VI der Fig. 5;
- Fig. 7-10: Pinzipzeichnungen der Abnahmeeinrichtung des zweiten Trägers mit Hilfe einer Lanze.

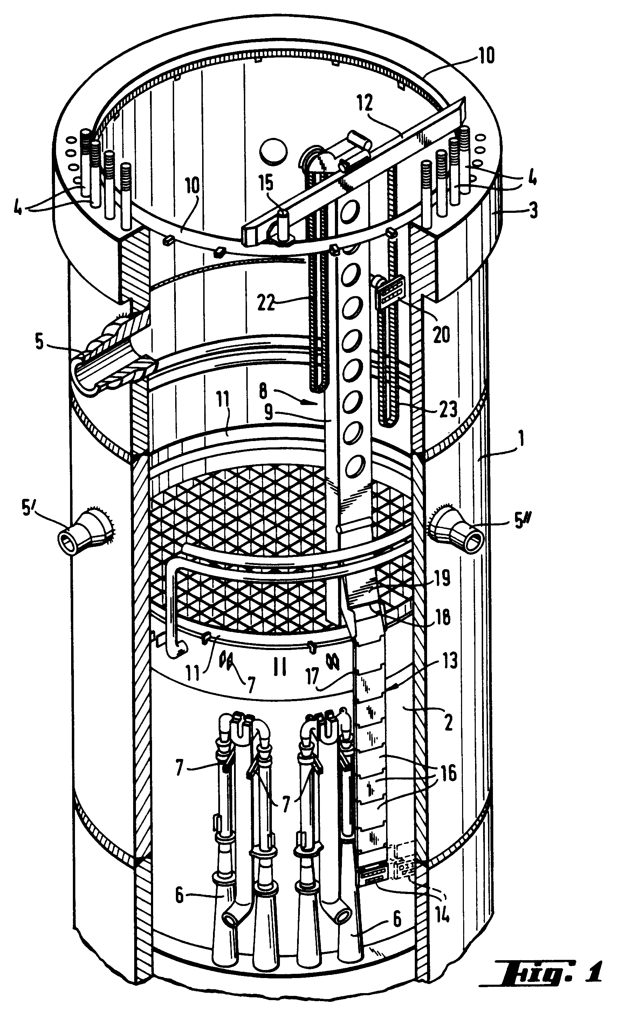

In Fig. 1 ist ein aufrechtstehender zylindrischer Kernreaktor-Druckbehälter 1 dargestellt, in welchem sich ein koaxial angeordneter ebenfalls zylindrischer Kernbrennstoffbehälter 2 befindet. Der Druckbehälter 1 weist am oberen Ende einen Flansch 3 auf, auf den bei Betrieb ein nicht dargestellter Deckel aufgesetzt ist, der mit Schraubenbolzen 4 befestigt wird. Der Druckbehälter 1 weist verschiedene Rohrstutzen auf, die nur beispielsweise bei 5,5' und 5'' angedeutet sind. Diese Rohrstutzen sowie auch beliebige andere Stellen des Druckbehälters 1 müssen zur Überprüfung mit Hilfe geeigneter Prüfgeräte, meist Ultraschallgeräte, zugänglich sein. Besondere Schwierigkeiten bereiten dabei Einbauten 6, welche sich in dem ohnehin engen Ringraum zwischen dem Kernbrennstoffbehälter 2 und dem Innenmantel des Druckbehälters befinden. Verstrebungen 7 in diesem Bereich stellen noch weitere Hindernisse für die Einführung der Prüfgeräte dar.

In Fig. 1 ist ein Manipulator 8 dargestellt, der einen vertikalen Mast 9 aufweist. Der Mast ist am oberen und unteren Ende in Umfangsrichtung des Druckbehälters verfahrbar gelagert und zwar auf der oberen Ringschiene 10 und der unteren Ringschiene 11. Auf der oberen Ringschiene 10 ist zunächst eine Brücke 12 angeordnet, welche eine Sekante zur oberen Ringschiene 10 bildet und so dimensioniert ist, daß der auf ihr verfahrbar gelagerte Mast 9 in radialer Richtung so weit zurückgesetzt wird, daß Hindernisse wie z.B. im Druckbehälter angeordnete Rohrleitungen mit hinreichendem Abstand umgangen werden können. Die obere Ringschiene 10 ist am oberen Rand des Druckbehälters abnehmbar befestigt und wird lediglich zu Prüfzwecken dort aufgesetzt.

Der Mast 9 ist am unteren Ende verfahrbar auf einer zweiten Ringschiene 11 gelagert, die ihrerseits am oberen Rand des Kernbrennstoffbehälters 2 abnehmbar angeordnet ist. Der Mast 9 ist als Hohlschiene ausgebildet, in deren Inneren sich ein in Längsrichtung verschiebbares und in Richtung zum Behälterinnenmantel auslenkbares Band 13 befindet. Dieses Band tritt im unteren Bereich des Mastes 9 aus diesem aus und es ragt bis in den Ringraum hinein, der sich zwischen der inneren Mantelfläche des Druckbehälters 1 und der äußeren Mantelfläche des Kernbrennstoffbehälters 2 befindet. Am Ende des Bandes 13 befindet sich ein erster Träger 14 für ein Prüfgerät.

Die Brücke 12 weist einen umsteuerbaren Antriebselektromotor 15 auf, der mit einem Zahnkranz der oberen Ringschiene 10 in Wirkverbindung steht und über nicht dargestellte Koppelglieder auch auf ein Fahrwerk am unteren Ende des Mastes 9 einwirkt. Bei der in der Zeichnung dargestellten bevorzugten Ausführungsform ist das Band 13 eine Gliederkette. Diese Kette besteht aus den einzelnen Kettengliedern 16, die durch dazwischen angeordnete Gelenke 17 miteinander verbunden sind. Die Verbindung muß durch präzise Ausführung so gestaltet sein, daß die Kette zwar in Richtung auf den Innenmantel des Druckbehälters auslenkbar ist, nicht aber in Richtung senkrecht dazu. Die einzelnen Kettenglieder weisen in der Regel eine Breite von 300-500 mm und eine Länge von etwa 600 mm auf. Der erste Träger 14, der sich am unteren Ende des auslenkbaren Bandes 13 befindet, ist seitlich ausfahrbar, was in Fig. 1 gestrichelt dargestellt ist. Der Mast 9 weist im unteren Bereich auf seiner zum Druckbehälterinnenmantel gerichteten Seite eine Führungsöffnung 18 für das Band 13 auf und im Bereich zwischen dieser Führungsöffnung und der unteren Ringschiene 11 einen verstellbaren Ausleger 19, mit dem das Band 13 in Richtung Druckbehälterinnenfläche auslenkbar ist.

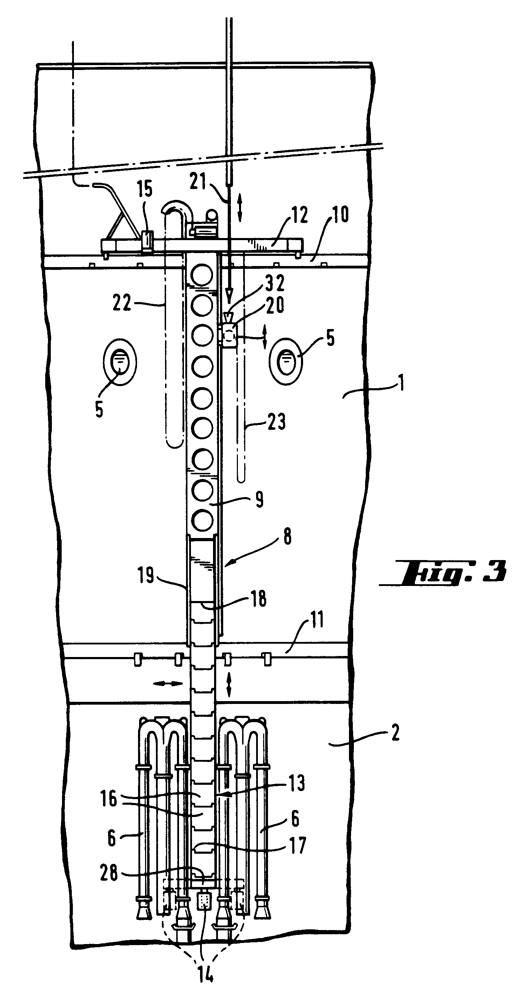

Fig. 1 läßt des weiteren erkennen, daß an wenigstens einer Schmalseite des Mastes 9 wenigstens ein zweiter Träger 20 zur Aufnahme von Prüfgeräten angeordnet ist, der beliebig in Mastlängsrichtung sowie in Richtung auf die Innenfläche des Druckbehälters, seitlich zur Mastlängsachse sowie rotativ um die Arbeitsachse des Prüfgerätes verstellbar ist. Dieser zweite Träger 20 ist einschließlich seines Drehantriebes mittels einer Lanze 21 (Fig. 3) abnehmbar. Fig. 1 läßt ferner noch erkennen, daß Schleppkabel 22 und 23 vorhanden sind, mit welchen die Träger bzw. die darauf angeordneten Prüfgeräte mit elektrischer Energie versorgt werden und über welche die gewonnenen Signale zur Auswertung abgeführt werden.

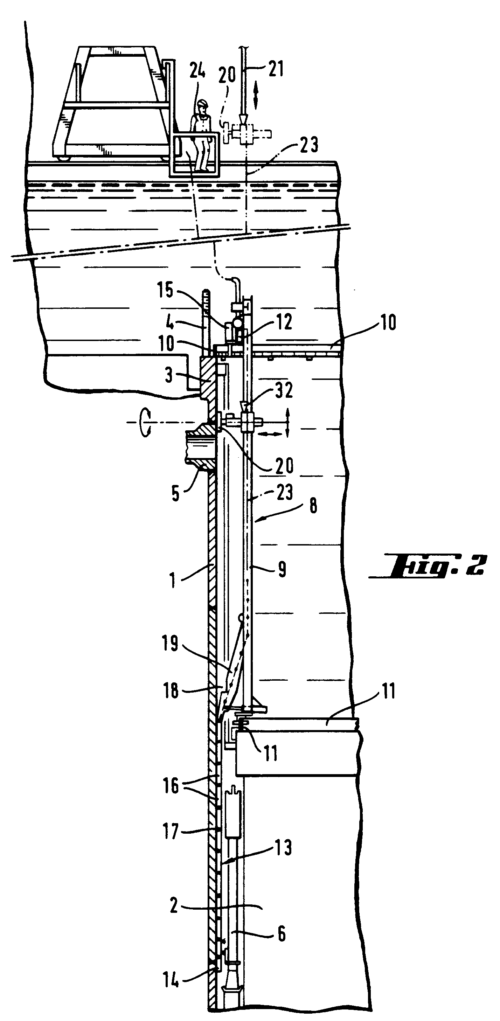

In den Figuren 2 und 3 ist die Anordnung nochmals in anderer Weise dargestellt. Gleiche Teile sind mit gleichen Bezugszeichen bezeichnet. Um einen Eindruck von der Größe der Anordnung zu geben, ist bei 24 eine Bedienungsperson eingezeichnet.

Um zu erreichen, daß der erste Träger mitsamt den darauf angeordneten Prüfgeräten sicher gegen die Innenseite des Druckbehälters 1 angedrückt wird, weist der Träger 14 hydraulische Rückstoßdüsen 25 auf, von denen in Fig. 4 zwei dargestellt sind. Ist der Träger in die gewünschte Position gebracht, so werden die Rückstoßdüsen eingeschaltet und stoßen nach hinten Wasserstrahlen 26 aus. Hierdurch wird bewirkt, daß die Prüfgeräte 27 in der gewünschten Weise an den Druckbehälter 1 gepreßt werden.

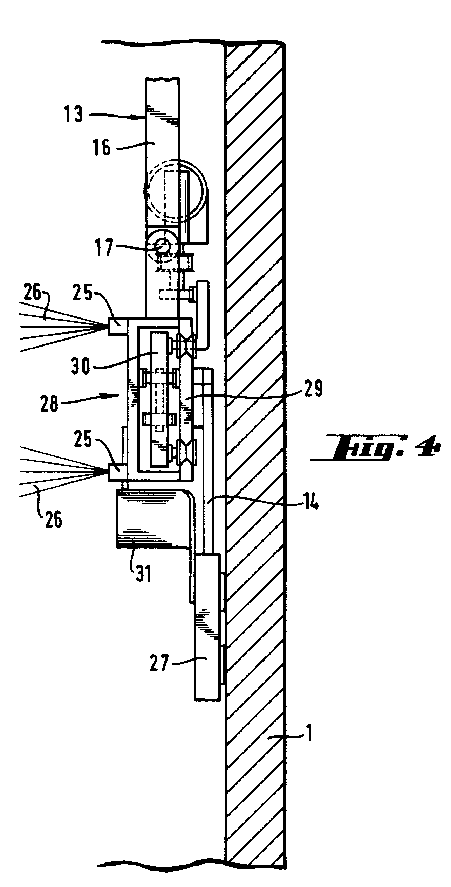

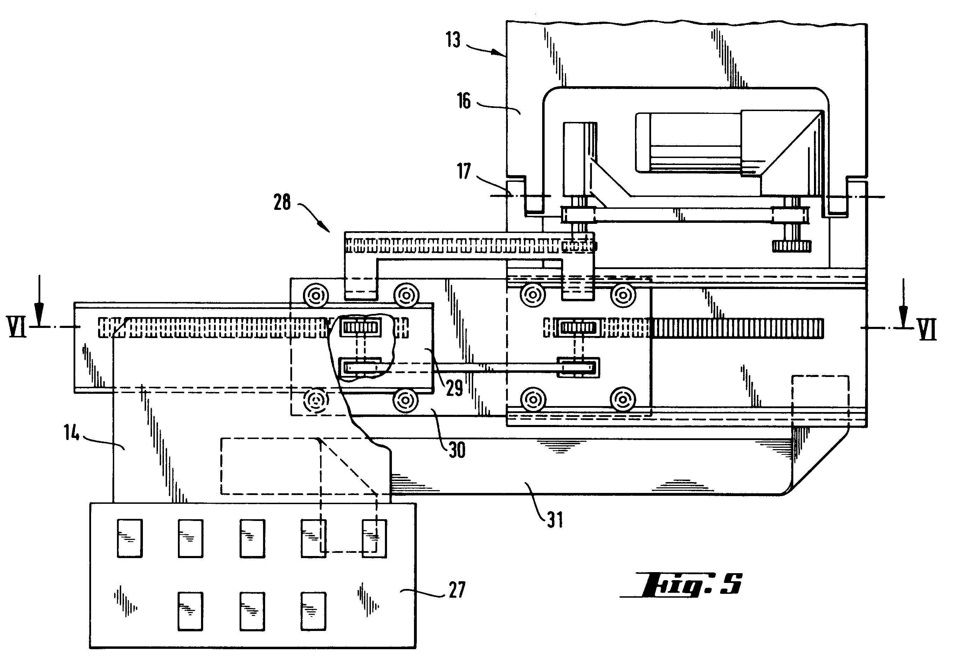

Wie bereits erläutert, kann der Träger 14 seitlich ausgefahren werden, was vorzugsweise über ein zweiteiliges Teleskop 28 geschehen soll, dessen beide Schübe 29 und 30 in aufeinander abgestimmter Weise angetrieben sind und welches mit dem Ende des auslenkbaren Bandes 13 verbunden ist. Der Träger 14 ist dabei wiederum über ein breites Schleppkabel 31 mit dem Bandende verbunden, über welches den Prüfgeräten Energie zugeführt wird und über welches die gewonnenen Signale abgeführt werden. Als Schleppkabel werden vorzugsweise Breitkabel mit mehreren nebeneinander angeordneten Leiterlitzen angewandt, wie diese aus der Computertechnik bekannt sind. Die Anordnung ist in Fig. 5 in der Vorderansicht und in Fig. 6 im Querschnitt dargestellt.

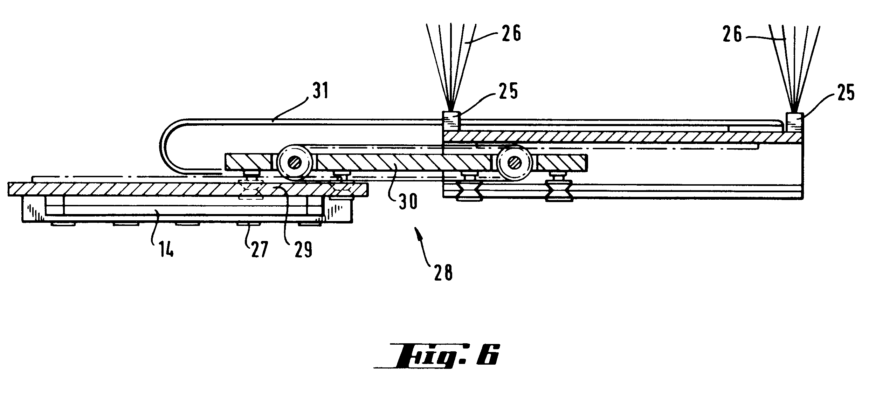

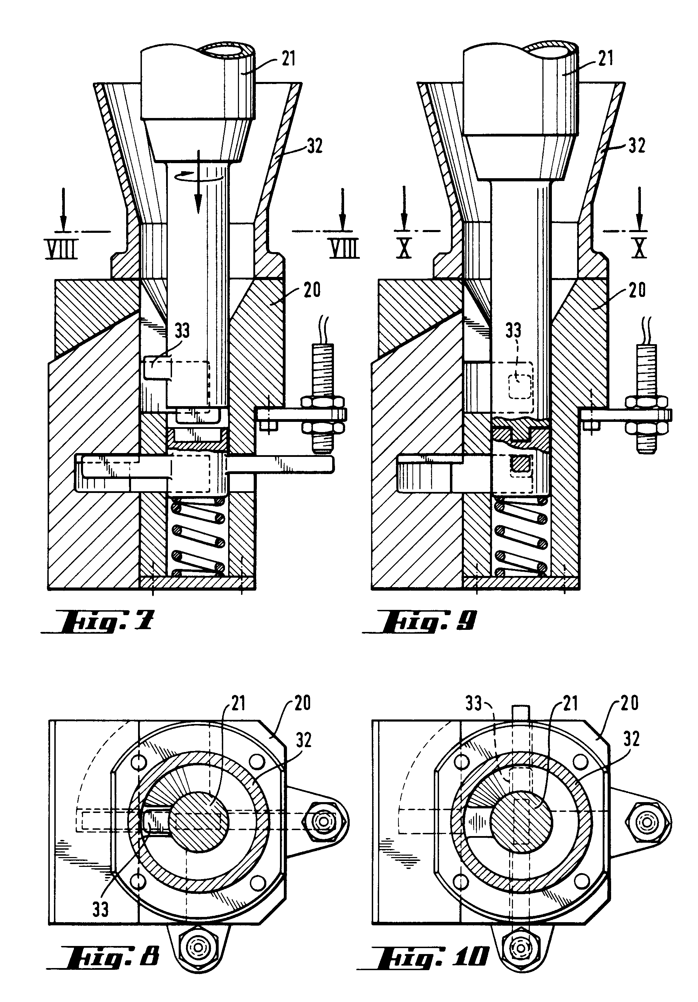

Wie bereits erwähnt, ist an wenigstens einer Schmalseite des Mastes 9 ein zweiter Träger 20 angeordnet. Dieser zweite Träger dient ebenfalls zur Aufnahme von Prüfgeräten und er ist beliebig in Richtung der Mastlängsachse und auf die Innenfläche des Druckbehälters, seitlich zur Mastlängsachse sowie rotativ um die Arbeitsachse des Prüfgerätes verstellbar. Dieser zweite Träger soll einschließlich seines Drehantriebes mittels einer Lanze 21 (Fig. 3) abnehmbar sein. Einige Einzelheiten hierzu sind in den Fig. 7-10 dargestellt. Um den zweiten Träger abzunehmen wird die Lanze 21 zunächst in eine dafür vorgesehene Öffnung eingeführt. Um dies zu erleichtern ist auf der Oberseite des zweiten Trägers ein Führungstrichter 32 angeordnet. Die Lanze weist am unteren Ende einen Schaltnippel 33 auf, der in der in Fig. 7 und 8 dargestellten Weise eingeführt wird. Ist die Lanze eingeführt, so sitzt der Träger nach wie vor fest an seiner Verankerung. Erst wenn die Lanze um ihre Vertikalachse um 90° gedreht wird, wird sowohl der Träger von seiner bisherigen Befestigung gelöst, wie auch eine sichere Verbindung zur Lanze hergestellt (Fig. 9 und 10). Ist dies geschehen, so kann der zweite Träger mitsamt den darauf befestigten Geräten nach oben mittels der Lanze hochgezogen werden.

## Patentansprüche

1. Einrichtung zur zerstörungsfreien Prüfung eines aufrechtstehenden zylindrischen Kernreaktor-Druckbehälters, in welchem sich ein koaxial angeordneter ebenfalls zylindrischer Kernbrennstoff-Behälter befindet, mit einem vertikalen, in den Druckbehälter hineinragenden Mast, der an seinem oberen und unteren Ende in Umfangsrichtung des Druckbehälters verfahrbar gelagert ist und der einen längs des Mastes verfahrbaren Träger für Prüfgeräte aufweist,
gekennzeichnet durch folgende Merkmale:
- Der Mast (9) ist am oberen Ende verfahrbar an einer Brücke (12) gelagert,
-- die ihrerseits auf einer ersten oberen Ringschiene (10) verfahrbar ist, welche am oberen Rand des Druckbehälters abnehmbar befestigt ist;
- der Mast (9) ist am unteren Ende verfahrbar auf einer zweiten unteren Ringschiene (11) gelagert,
-- die ihrerseits am oberen Rand des Kernbrennstoffbehälters (2) abnehmbar angeordnet ist;
- der Mast (9) ist als Hohlschiene ausgebildet, in deren Inneren sich ein in Längsrichtung verschiebbares in Richtung zum Behälterinnenmantel auslenkbares Band (13) befindet,
das im unteren Bereich des Mastes (9) aus diesem austritt und bis in den Ringraum zwischen der inneren Mantelfläche des Druckbehälters (1) und der äußeren Mantelfläche des Kernbrennstoffbehälters (2) reicht und an seinem Ende einen ersten Träger (14) für wenigstens ein Prüfgerät aufweist.

2. Einrichtung nach Anspruch 1,
dadurch gekennzeichnet,
daß die Brücke (12) einen umsteuerbaren Antriebselektromotor (15) aufweist, der mit einem Zahnkranz der oberen Ringschiene (10) in Wirkverbindung steht und über Koppelglieder auch auf ein Fahrwerk am unteren Ende des Mastes (9) einwirkt.

3. Einrichtung nach Anspruch 1 oder 2,
dadurch gekennzeichnet,
daß das Band (13) eine Gliederkette ist.

4. Einrichtung nach einem der Ansprüche 1 bis 3,
dadurch gekennzeichnet,
daß der erste Träger (14) am Ende des auslenkbaren Bandes (13) seitlich ausfahrbar ist.

5. Einrichtung nach Anspruch 4,
dadurch gekennzeichnet,
daß der erste Träger (14) über ein 2-teiliges Teleskop (28), dessen beide Schübe (29,30) in aufeinander abgestimmter Weise angetrieben sind mit dem Ende des auslenkbaren Bandes (13) verbunden ist.

6. Einrichtung nach einem der Ansprüche 1 bis 5,
dadurch gekennzeichnet,
daß der am Ende des auslenkbaren Bandes angeordnete Träger (14) hydraulische Rückstoßdüsen (25) aufweist, die ihn bzw. das an ihm montierte Prüfgerät gegen den Innenmantel des Druckbehälters andrücken.

7. Einrichtung nach einem der Ansprüche 1 bis 6,
dadurch gekennzeichnet,
daß der Mast (9) im unteren Bereich auf seiner zum Druckbehälter-Innenmantel gerichteten Seite eine Führungsöffnung (18) für das Band (13) aufweist und daß im Bereich zwischen dieser Führungsöffnung und der unteren Ringschiene (11) ein verstellbarer Ausleger (19) angeordnet ist, mit dem das Band (13) in Richtung Druckbehälter-Innenfläche auslenkbar ist.

8. Einrichtung nach einem der Ansprüche 1 bis 7,
dadurch gekennzeichnet,
daß an wenigstens einer Schmalseite des Mastes (9) wenigstens ein zweiter Träger (20) zur Aufnahme von Prüfgeräten angeordnet ist, der beliebig in Mastlängsrichtung sowie in Richtung auf die Innenfläche des Druckbehälters, seitlich zur Mastlängsachse sowie rotativ um die Arbeitsachse des Prüfgerätes bewegbar ist.

9. Einrichtung nach Anspruch 7,
dadurch gekennzeichnet,
daß der zweite Träger (20) einschließlich seines Drehantriebes mittels einer Lanze (21) abnehmbar ist.

## Claims

1. An apparatus for the nondestructive testing of an upright cylindrical nuclear reactor pressure vessel wherein there is disposed a coaxially arranged nuclear fuel container that is also cylindrical, with a vertical mast projecting into the pressure vessel which is mounted at its top and bottom end for displacement in the peripheral direction of the pressure vessel and which has a carrier for test instruments that is displaceable along the mast,
characterized by the following features:
- the mast (9) is mounted at its upper end for displacement on a bridge (12),
-- which is, for its part, displaceable on a first upper annular rail (10) that is detachably mounted on the upper rim of the pressure vessel;
- the mast (9) is at its bottom end displaceably mounted on a second lower annular rail (11),
-- which is, for its part, detachably mounted on the upper rim of the pressure vessel (2);
- the mast (9) is formed as a hollow rail inside which a belt (13) is disposed for displacement in the longitudinal direction, which is deflectable towards the inner wall surface of the vessel,
which belt emerges in the bottom zone of the mast (9) from the latter and extends as far as the annular space between the inner wall surface of the pressure vessel (1) and the outer wall surface of the nuclear fuel container (2) and has at its end a first carrier (14) for at least one test instrument.

2. An apparatus according to claim 1,
characterized in that
the bridge (12) has a reversible electric drive motor (15) which is in an operative connection with a toothed ring of the upper annular rail (10) and which also acts via coupling elements on a travel mechanism at the bottom end of the mast (9).

3. An apparatus according to claim 1 or 2,
characterized in that
the belt (13) is a link chain.

4. An apparatus according to one of claims 1 to 3,
characterized in that
the first carrier (14) can be laterally moved out at the end of the deflectable belt (13).

5. An apparatus according to claim 4,
characterized in that
the first carrier (14) is connected to the end of the deflectable belt (13) via a two-part telescopic member (28) whose two thrust elements (29, 30) are driven in a way coordinated with each other.

6. An apparatus according to one of claims 1 to 5,
characterized in that
the carrier (14) arranged at the end of the deflectable belt has hydraulic reaction jets (25) which press it or the test instrument mounted thereon, against the inner wall surface of the pressure vessel.

7. An apparatus according to one of claims 1 to 6,
characterized in that
the mast (9) has in the lower region of its side facing the pressure vessel, a guide opening (18) for the belt (13), and that in the zone between this guide opening and the lower annular rail (11), there is arranged an adjustable arm (19) whereby the belt (13) can be deflected in the direction towards the inner surface of the pressure vessel.

8. An apparatus according to one of claims 1 to 7,
characterized in that
on at least one narrow side of the mast (9), there is arranged at least one second carrier (20) for accommodating test instruments which can be moved as desired in the longitudinal direction of the mast and in the direction towards the inner face of the pressure vessel, laterally towards the longitudinal axis of the mast and rotationally round the operative axis of the test instrument.

9. An apparatus according to claim 7,
characterized in that
the second carrier (20) can be removed together with its rotary drive by means of a lance (21).

## Revendications

1. Installation pour l'examen non destructif d'une cuve de pression de réacteur nucléaire, cylindrique et en position verticale, dans laquelle se trouve un récipient de combustible nucléaire également cylindrique et agencé coaxialement, avec un mât vertical pénétrant dans la cuve de pression, qui est logé par ses extrémités supérieure et inférieure de façon déplaçable dans la direction périphérique de la cuve de pression et qui présente un porte-appareil d'examen déplaçable le long du mât,
caractérisée en ce que :
- le mât (9) est logé par son extrémité supérieure de façon déplaçable sur un pont (12),
-- qui, à son tour, est déplaçable sur un premier rail annulaire (10) supérieur, qui est fixé de façon détachable sur le bord supérieur de la cuve de pression;
- le mât (9) est logé par son extrémité inférieure de façon déplaçable sur un second rail annulaire (11) inférieur,
-- qui, à son tour, est agencé de façon détachable sur le bord supérieur du récipient de combustible nucléaire (2);
- le mât (9) est réalisé sous la forme d'un rail creux, à l'intérieur duquel se trouve un ruban (13) déplaçable dans la direction longitudinale, et susceptible d'être défléchi en direction de l'enveloppe intérieure du récipient,
ledit ruban (13) sortant dans la région inférieure du mât (9) hors de celui-ci et qui s'étendant jusqu'à l'espace annulaire entre la surface intérieure de l'enveloppe de la cuve de pression (1) et la surface extérieure de l'enveloppe du récipient de combustible nucléaire (2), et présentant sur son extrémité un premier porte-appareil (14) pour au moins un appareil d'examen.

2. Installation selon la revendication 1,
caractérisée en ce que
le pont (12) présente un moteur d'entraînement électrique (15) commutable qui se trouve en liaison active avec une couronne dentée du rail annulaire supérieur (10), et qui agit également sur un dispositif de déplacement à l'extrémité inférieure du mât (9) par l'intermédiaire de pièces d'accouplement.

3. Installation selon l'une ou l'autre des revendications 1 et 2,
caractérisée en ce que le ruban (13) est une chaîne à maillons.

4. Installation selon l'une quelconque des revendications 1 à 3,
caractérisée en ce que le premier porte-appareil (14) est déplaçable latéralement à l'extrémité du ruban (13) susceptible d'être défléchi.

5. Installation selon la revendication 4,
caractérisée en ce que le premier porte-appareil (14) est relié à l'extrémité du ruban (13) susceptible d'être défléchi par l'intermédiaire d'un dispositif télescopique en deux parties (28), dont les deux membres (29, 30) sont entraînés en correspondance mutuelle.

6. Installation selon l'une quelconque des revendications 1 à 5,
caractérisée en ce que
le porte-appareil (14) agencé sur l'extrémité du ruban susceptible d'être défléchi présente des buses de renvoi hydrauliques (25) qui pressent le porte-appareil ou l'appareil d'examen monté sur celui-ci contre l'enveloppe intérieure de la cuve de pression.

7. Installation selon l'une quelconque des revendications 1 à 6,
caractérisée en ce que
le mât (9) présente dans sa région inférieure et sur son côté orienté vers l'enveloppe intérieure de la cuve de pression une ouverture de guidage (18) pour le ruban (13), et en ce qu'un bras réglable (19) est agencé dans la région entre cette ouverture de guidage et le rail annulaire inférieur (11), bras grâce auquel le ruban (13) est susceptible d'être défléchi en direction de l'enveloppe intérieure de la cuve de pression.

8. Installation selon l'une quelconque des revendications 1 à 7,
caractérisée en ce que
sur au moins un côté étroit du mât (9) est agencé au moins un second porte-appareil (20) pour la réception d'un appareil d'examen, porte-appareil qui est déplaçable de façon quelconque dans la direction longitudinale du mât, en direction de la surface intérieure de la cuve de pression, en direction latérale de l'axe longitudinal du mât, ainsi qu'en rotation autour de l'axe de fonctionnement de l'appareil d'examen.

9. Installation selon la revendication 7,
caractérisée en ce que le second porte-appareil (20), y compris son entraînement rotatif, est détachable au moyen d'une lance (21).
